**Europäisches Patentamt**

**European Patent Office**

**Office européen des brevets**

(19)

(11) Veröffentlichungsnummer: **0 013 980**
**B1**

# (12) EUROPÄISCHE PATENTSCHRIFT

(45) Veröffentlichungstag der Patentschrift:
**05.05.82**

(21) Anmeldenummer: **80100337.7**

(22) Anmeldetag: **23.01.80**

(51) Int. Cl.³: **B 01 J 35/02, B 01 J 23/88,
C 10 G 45/08**

(54) **Verwendung von Kobalt-Molybden- und/oder Nickel-Molybden-Oxid-Katalysatoren zur hydrierenden Raffination von Erdöl-Kohlenwasserstoffen.**

(30) Priorität: **27.01.79 DE 2903193**

(43) Veröffentlichungstag der Anmeldung:
**06.08.80 Patentblatt 80/16**

(45) Bekanntmachung des Hinweises auf die Patenterteilung:
**05.05.82 Patentblatt 82/18**

(84) Benannte Vertragsstaaten:
**BE DE FR IT NL**

(56) Entgegenhaltungen:
**GB-A-1 415 417
US-A-4 133 777**

(73) Patentinhaber: **BASF Aktiengesellschaft,
Carl-Bosch-Strasse 38, D-6700 Ludwigshafen (DE)**

(72) Erfinder: **Fehr, Erich K., Dr. Dipl.-Chem.,
Kastellstrasse 25, D-6700 Ludwigshafen (DE)**
Erfinder: **Gallei, Ewald, Dr. Dipl.-Chem.,
August-Bebel-Strasse 48, D-6806 Viernheim (DE)**
Erfinder: **Saum, Walter, Dr. Dipl.-Chem., Neustadter
Strasse 28, D-6715 Lambsheim (DE)**

## Verwendung von Kobaltmolybdän- und/oder Nickelmolybdänoxidkatalysatoren zur hydrierenden Raffination von Erdölkohlenwasserstoffen

Es ist bekannt, für die hydrierende Raffination von Erdölkohlenwasserstoffen, d.h. Entschwefelung, Stickstoffabbau und Metallentfernung Katalysatoren aus CoO, $MoO_3$ und/oder $NiO/MoO_3$ auf einem Tonerdeträger — meist $\tau$-$Al_2O_3$ —, zu verwenden. Die Katalysatoren werden in oxidischer Form hergestellt und im Reaktor durch Behandlung mit Schwefelverbindungen enthaltenden Gasen oder Flüssigkeiten in die aktive, sulfidische Form übergeführt.

Nach dem Stand der Technik sind $CoO/MoO_3$ bzw. $NiO/MoO_3$-Katalysatoren zylinderförmige Formkörper, die als Extrudate mit 3 bis 1,5 mm Durchmesser oder als Tabletten mit 3 bis 5 mm Durchmesser und gelegentlich auch als Kugeln hergestellt werden.

Eine Erhöhung der Aktivität ist durch eine Verkleinerung des Zylinderstrangdurchmessers zu erreichen. Für Rückstandsöl entspricht die Zunahme der Aktivität der Abnahme des Strangdurchmessers bis zu einem unteren Grenzwert von 1 mm. Eine weitere Reduzierung des Strangdurchmessers führt jedoch nicht zu einer weiteren Zunahme der Aktivität. Mit Verkleinerung des Strangdurchmessers steigt jedoch die Druckdifferenz im Reaktor an. Gleichzeitig nimmt die mechanische Festigkeit der Katalysatorstränge ab.

Es sind auch schon sehr kleine Katalysatorteilchen, die von der Zylinderform abweichen, beschrieben. Für diese gilt, dass alle Punkte im Katalysatorinneren weniger als 0,38 mm von der Oberfläche entfernt liegen und ein Oberflächen-zu-Volumen-Verhältnis von 40 bis 100 $cm^{-1}$ besitzen sollen. Derartige Katalysatoren sind jedoch mechanisch äusserst empfindlich und technisch kaum herstellbar.

Schliesslich hat man Katalysatoren mit mehrlappigem Querschnitt oder in Form eines Doppelzylinders (GB-A-Nr. 1415417) beschrieben, für die ebenfalls das Verhältnis von Oberfläche zu Volumen gegenüber einem Zylinderstrang mit gleichen Aussendurchmesser stark erhöht ist.

Dieser Katalysator besitzt eine ungünstige hydrodynamische Form, da sich an der Katalysatoroberfläche Flüssigkeitsmenisken bilden. Dadurch wird ein Teil der Katalysatoroberfläche bei der bevorzugten Rieselfahrweise blockiert.

Es besteht daher weiterhin der Bedarf nach einem hochaktiven $CoO/MoO_3$ bzw. $NiO/MoO_3$-Katalysator, dessen Formgebung nicht die Mängel der oben angegebenen Katalysatoren besitzt.

Es wird ein Katalysator mit höherer Aktivität benötigt, um den gesetzlich geforderten Entschwefelungsgrad ohne Vergrösserung des Reaktorvolumens zu erreichen bzw. auch schwefel- und stickstoffreichere Rohstoffe als bisher einsetzen zu können. Ferner kann bei aktiveren Katalysatoren die Reaktionstemperatur gesenkt werden, so dass Energie eingespart und die Lebensdauer des Katalysators erhöht werden kann.

Hauptziel ist es also, die Volumenaktivität des Katalysators zu erhöhen. Gleichzeitig soll das Gewicht des eingebauten Katalysators möglichst niedrig sein, ohne die mechanischen Kennziffern, wie Härte und Abrieb gegenüber herkömmlichen Katalysatoren zu verschlechtern.

Schliesslich wird angestrebt, die Katalysatorherstellung in den herkömmlichen Anlagen durchzuführen.

Die Erfindung betrifft die Verwendung von Katalysatoren für die Behandlung von Erdöldestillaten mit Wasserstoff bei 6 bis 100 bar und 200 bis 500°C, die Kobaltoxid bzw. Nickeloxid, Molybdänsäure und Tonerde enthalten und die geometrische Form eines gewundenen Doppelzylinders haben.

Dabei erreicht man eine Hydrierung von Schwefel- und Stickstoffverbindungen, von Olefinen und Aromaten sowie eine Metallabscheidung, so dass Produkte mit höherer Reinheit und verbesserter Stabilität entstehen. Hauptanwendungsgebiet ist die hydrierende Entschwefelung von Benzin, Gazöl, Vakuumgasöl und Rückstandsöl.

Der erfindungsgemässe Katalysator mit neuer geometrischer Form besitzt höhere katalytische Aktivität und Lebensdauer und niedrigeren Druckverlust gegenüber herkömmlichen Katalysatoren.

Es war bekannt, dass die Aktivität eines Katalysators beim Einsatz in der Rieselphase steigt, wenn der Strangdurchmesser erniedrigt wird.

Dieser Methode sind jedoch Grenzen gesetzt, da bei einem Strangdurchmesser unter 1,2 mm, die Herstellung besonders schwierig wird, im Reaktor hoher Druckverlust entsteht, die mechanische Stabilität des Katalysators gering ist und zu hohem Abrieb und zu Reaktorverstopfung führt.

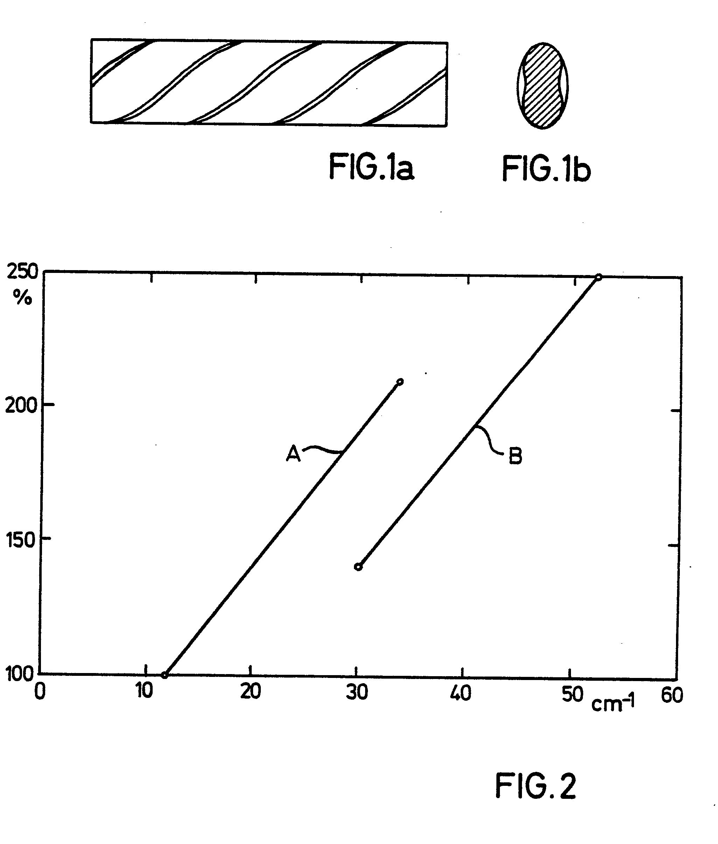

Diese Schwierigkeiten werden durch den erfindungsgemässen Katalysator überwunden, der die Form eines gewundenen Doppelzylinders hat (Fig. 1). Als besonders günstig hat sich die konvexe Form, wie sie auch beim Zylinderstrang vorliegt, erwiesen. Durch die Formgebung steht wie bei einem Zylinderstrang die gesamte Oberfläche für die Reaktion zur Verfügung.

Der $MoO_3$-Gehalt bewegt sich zwischen 10 und 20 Gew.%, der CoO- bzw. NiO-Gehalt zwischen 1 und 8 Gew.%. Neben $Al_2O_3$ sind gelegentlich bis zu 20% $SiO_2$ oder Zeolithe enthalten. Neben der chemischen Zusammensetzung sind die physikalischen Eigenschaften der $CoO/MoO_3$-Katalysatoren für ihre Aktivität entscheidend. Die spezifische Oberfläche (BET) liegt stets oberhalb von 100 $m^2$/g, meist zwischen 200 und 300 $m^2$/g; das Porenvolumen (gemessen durch Quecksilberpenetration oder Wasseraufnahme) liegt zwischen 0,4 und 0,8 ml/g. Von grosser Bedeutung ist die Porenverteilung. Die Porendurchmesser des grössten Porenanteils sollen zwischen 5 und 20 nm liegen, nach anderen Autoren soll der häufigste Porendurchmesser 6 nm sein.

Der erfindungsgemässe Katalysator in Form eines gewundenen Doppelzylinders besitzt gegenüber einem zylindrischen Katalysator mit gleichem Aussendurchmesser, bezogen auf das Katalysatorgewicht, eine doppelt bzw. dreimal so grosse Oberfläche.

Die katalytische Aktivität für die Entschwefelung und den Stickstoffabbau von Vakuumgasöl (s. Tab. 1) ist gegenüber den Zylindersträngen wesentlich höher (s. Tab. 4); d.h. bei Verwendung des erfindungsgemässen Katalysators kann ein höherer Entschwefelungsgrad erreicht werden, oder es kann bei gleichgehaltenem Entschwefelungsgrad die Temperatur gesenkt werden.

Für die Entschwefelung und den Stickstoffabbau von Gasöl (s. Tab. 1) kommt ein Gewinn an Volumenaktivität der erfindungsgemässen Katalysatoren nicht zum Tragen wohl aber bei der Raffination von Vakuumgasöl (s. Tab. 4). Schwere Rohölfraktionen, wie Vakuumdestillate, entasphaltierte Öle und Destillationsrückstände liegen unter den Bedingungen der hydrierenden Raffination vorwiegend in flüssiger Phase vor. Da der Umsatz am Katalysator durch den Stofftransport bestimmt wird, ist besonders für diese Fraktion die geometrische Oberfläche bzw. das Verhältnis von geometrischer Oberfläche zu geometrischem Volumen entscheidend (s. Tab. 3).

Bei der Entschwefelung von Vakuumgasöl steigt die Volumenaktivität von 100% für 3 nm Zylinderstränge auf 210% für 1,5 mm Zylinderstränge (Fig. 2). Die Volumenaktivität der erfindungsgemäss hergestellten Katalysatoren beträgt 140 bzw. 250%.

Ein Vergleich der Geraden in Fig. 2 zeigt, dass Zylinderstränge (Gerade A) bei gleichem Verhältnis Oberfläche zu Volumen eine höhere Volumenaktivität ergeben. Das Verhältnis von Oberfläche zu Volumen muss bei den gewundenen Doppelzylindern (Gerade B) um mindestens 10 cm$^{-1}$ grösser sein, um eine mit den Zylindersträngen vergleichbare oder höhere Volumenaktivität zu erzielen.

Ebenfalls unerwartet ist die hohe mechanische Stabilität des Katalysators.

Weiterhin vorteilhaft ist die Verminderung des Druckverlustes im Reaktor. Bei einem Vergleich der Katalysatoren 4 und 2 beträgt er 20 bis 30% (Tabelle 5).

Aus der hohen Aktivität des erfindungsgemässen Katalysators und seinem hohen Quotienten aus Oberfläche und Volumen ergeben sich grössere Zykluszeiten bis zur Regenerierung im Reaktor und eine höhere Lebensdauer.

Die Verformung der Katalysatormasse kann auf üblichen Zylinderstrangpressen oder Schneckenextrudern erfolgen.

*Beispiel 1:*

1,0 kg Tonerdehydrat (Böhmit bzw. Bayerit, ca. 75% Al$_2$O$_3$) werden mit etwa 500 g H$_2$O unter Zusatz eines Peptisiermittels in einem Kneter vermischt und verdichtet. Die entstehende Masse wird mittels einer Zylinderstrangpresse mit Auspressdüsen verformt, die einen gewundenen Doppelzylinder enthält. Die entstehenden gewundenen Doppelzylinder trocknet man 5 h bei 120°C und kalziniert sie 3 h bei 550°C.

Das so hergestellte Material besitzt eine Wasseraufnahme von 60%. Zur Tränkung wurden 500 g Al$_2$O$_3$-Doppelzylinderstränge und 300 ml einer Lösung von 113 g Ammoniumheptamolybdat und 116 g Kobaltnitratlösung mit 16% CoO in Wasser verwendet. Die getränkten Stränge werden 5 h bei 120°C getrocknet und 3 h bei 550°C kalziniert. Der Durchmesser des umgebenden Zylinders beträgt 2,4 mm Katalysator 1 und 1,4 mm Katalysator 2.

|                  | Katalysator 1 | Katalysator 2 |
| ---------------- | ------------- | ------------- |
| Schüttgewicht    | 800 g/l       | 810 g/l       |
| Druckfestigkeit  | 10 kg         | 10 kg         |
| MoO$_3$          | 15,1%         | 14,9%         |
| CoO              | 2,9%          | 3,2%          |

Die Ergebnisse der Aktivitätsprüfung sind in Tabelle 2 wiedergegeben.

Zum Vergleich wird in gleicher Weise eine Tonerdeknetpaste zu einem Zylinderstrang verformt und analog weiterverarbeitet. Der Durchmesser des fertigen Katalysators beträgt 2,9 mm Katalysator 3 und 1,5 mm Katalysator 4.

|                  | Katalysator 3 | Katalysator 4 |
| ---------------- | ------------- | ------------- |
| Schüttgewicht    | 800 g/l       | 875 g/l       |
| Druckfestigkeit  | 10 kg         | 10 kg         |
| MoO$_3$          | 14,8%         | 15,1%         |
| CoO              | 3,4%          | 3,1%          |

Ergebnisse der Aktivitätsprüfung sind in der Tabelle 4 wiedergegeben.

Tabelle 1. Eigenschaften des verwendeten Gasöls und Vakuumgasöls

|                    | Gasöl | Vakuumgasöl |
| ------------------ | ----- | ----------- |
| Schwefel (Gew.%)   | 1,14  | 2,70        |
| Siedebeginn (°C)   | 175   | 229         |
| Siedeende (°C)     | 348   | 555         |
| Dichte / 15°C      | 0,843 | —           |
| Dichte / 70°C      | —     | 0,909       |
| N (bas.) (mg/kg)   | 80    | 539         |

Tabelle 2. Prüfbedingungen

|                          | Gasöl | Vakuumgasöl |
| ------------------------ | ----- | ----------- |
| Druck (bar)              | 30    | 30          |
| Temperatur (°C)          | 330   | 390         |
| Katalysatorbelastung     |       |             |
| (1/1 Kat. u. h)          | 2/3/4 | 2/3         |

Tabelle 3. Physikalische Eigenschaften der Katalysatoren

| Katalysator | Form | Durch-messer (cm) | Länge (cm) | geometrische Oberfläche (cm²) | Volumen (cm³) | Verhältnis Oberfläche/ Volumen (cm⁻¹) |
|---|---|---|---|---|---|---|
| 1 | gewundener Doppelzylinder | — | 0,7 | 0,637 | 0,021 | 30 |
| 2 | gewundener Doppelzylinder | — | 0,5 | 0,266 | 0,0051 | 52 |
| 3 | Zylinder | 0,29 | 0,7 | 0,770 | 0,066 | 12 |
| 4 | Zylinder | 0,15 | 0,5 | 0,271 | 0,0088 | 31 |

Tabelle 4. Prüfergebnisse

Volumenaktivität[1] für Entschwefelung

| | Gasöl | | | Vakuumgasöl | |
|---|---|---|---|---|---|
| Durchsatz | | | | | |
| − 1/1 Kat. u. h | 2 | 3 | 4 | 2 | 3 |
| Katalysator 1 | 107 | 108 | 111 | 146 | 133 |
| Katalysator 2 | 161 | 152 | 145 | 271 | 229 |
| Katalysator 3 | 100 | 100 | 100 | 100 | 100 |
| Katalysator 4 | 163 | 148 | 149 | 227 | 193 |

[1] $\text{Volumenaktivität \% } = \dfrac{\text{(Rest-S) Standard}}{\text{(Rest-S) Prüf.-Kat.}} \cdot 100$

Tabelle 5. Druckverlust

(a) Luft 5 m³/h
(b) Luft 10 m³/h

| Katalysator | Druckverlust in mm- Wassersäule | |
|---|---|---|
| | (a) | (b) |
| 1 | 25 | 76 |
| 2 | 47 | 150 |
| 3 | 27 | 80 |
| 4 | 66 | 180 |

## Patentanspruch

Kobalt- und/oder Nickelmolybdänkatalysatoren, die Kobaltoxid und/oder Nickeloxid, Molyb-dänsäure und Tonerde enthalten in Form eines Doppelzylinders für die hydrierende Raffination von Erdölkohlenwasserstoffen bei einem Wasserstoffdruck von 6 bis 100 bar und Temperaturen von 200 bis 500° C, dadurch gekennzeichnet, dass diese Katalysatoren die geometrische Form eines gewundenen Doppelzylinders haben.

## Claim

Cobalt- and/or nickel-molybdenum catalysts, containing cobalt oxide and/or nickel oxide, molybdic acid and alumina, in the form of a dual cylinder for the hydrofining of petroleum hydrocarbons at a hydrogen pressure of from 6 to 100 bar and a temperature of from 200° to 500°C, characterized in that these catalysts have the geometric shape of an intertwined dual cylinder.

## Revendication

Catalyseurs au molybdène et au cobalt et/ou au nickel, contenant de l'oxyde de cobalt et/ou de l'oxyde de nickel, de l'acide molybdique et de l'alumine, sous forme d'un double cylindre, pour le raffinage par hydrogénation d'hydrocarbures du pétrole sous une pression d'hydrogène de 6 à 100 bar et à une température de 200 à 500°C, caractérisés en ce que ces catalyseurs ont la forme géométrique d'un double cylindre torse.

FIG.1a          FIG.1b

FIG.2